# EUROPÄISCHE PATENTSCHRIFT

(11) **EP 2 493 733 B1**
(45) Veröffentlichungstag und Bekanntmachung des Hinweises auf die Patenterteilung: **11.06.2014**
(21) Anmeldenummer: 10752810.1
(22) Anmeldetag: 13.09.2010
(51) Int. Cl.: B60T 8/17, B60T 8/32, B60T 8/34, B60T 8/36, B60T 8/50, B60T 13/66, B60T 13/74

(54) **VERFAHREN ZUR ANSTEUERUNG EINES HOCHDRUCK-SCHALTVENTILS IN EINEM HYDRAULISCHEN KFZ-BREMSSYSTEM**
METHOD FOR ACTUATING A HIGH PRESSURE CONTROL VALVE IN A HYDRAULIC MOTOR VEHICLE BRAKING SYSTEM
PROCÉDÉ DE COMMANDE D'UNE SOUPAPE DE COMMANDE HAUTE PRESSION DANS UN SYSTÈME DE FREINAGE HYDRAULIQUE DE VÉHICULE AUTOMOBILE

(30) Priorität: 26.10.2009 DE 102009045993
(43) Veröffentlichungstag der Anmeldung: 05.09.2012
(73) Patentinhaber: Robert Bosch GmbH, 70442 Stuttgart (DE)
(72) Erfinder: BUNK, Michael, Hampton, Vic 3188 (AU); RODELGO LUCAS, Jose-Maria, 70176 Stuttgart (DE)
(86) Internationale Anmeldenummer: PCT/EP2010/063370
(87) Internationale Veröffentlichungsnummer: WO 2011/051046

(56) Entgegenhaltungen:
- DE-A1- 10 059 348
- DE-A1- 10 227 785
- DE-A1- 19 525 538
- DE-A1- 19 620 037
- DE-A1-102006 024 361
- US-A1- 2004 183 366

## Beschreibung

### Stand der Technik

Die Erfindung betrifft ein Verfahren zum Ansteuern eines Ventils gemäß dem Oberbegriff des Patentanspruchs 1.

Moderne Bremssysteme, die für eine Fahrdynamikregelung ausgelegt sind, haben üblicherweise mehrere Ventile, mit denen zwischen einem Fuß-Bremsbetrieb und einem automatischen Bremsbetrieb umgeschaltet werden kann.

Aus dem Stand der Technik ist beispielsweise die DE 102 27 785 A1 bekannt, welche ein Verfahren und eine Vorrichtung zur Ansteuerung von Magnetventilen beschreibt. Das Verfahren sieht zur Ansteuerung wenigstens eines Ventils eines Bremskreises durch eine elektrische Ansteuergröße vor, dass eine den Zusammenhang zwischen der am Ventil abfallenden Druckdifferenz und der elektrischen Ansteuergröße charakterisierende Kennlinie wenigstens einen Bereich aufweist, in dem eine Änderung der elektrischen Größe zu einer Änderung der Druckdifferenz führt und ein Startwert für die elektrische Ansteuergröße während der Ventilansteuerung so gewählt wird, dass er in diesem Bereich oder an der Grenze dieses Bereichs liegt. Weiterhin ist aus der DE 10 2006 024 361 A1 ein Verfahren zum Steuern des an einer Radbremse wirkenden Bremsdrucks bekannt.

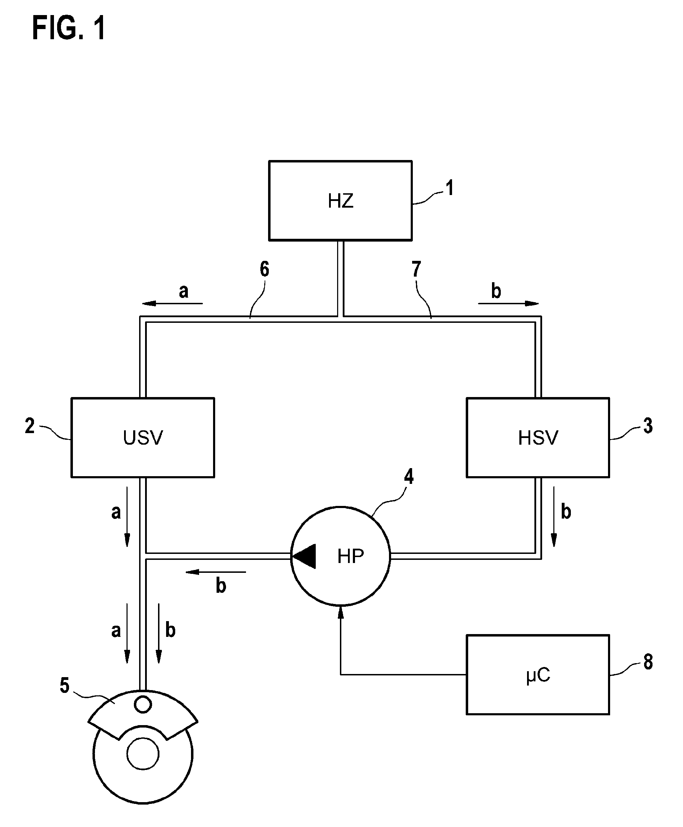

Figur 1 zeigt den für die Erfindung wesentlichen Teil eines bekannten hydraulischen Bremssystems, das zur Durchführung einer Fahrdynamikregelung eingerichtet ist. Der dargestellte Teil des Bremssystems umfasst einen Hauptbremszylinder 1, ein Umschaltventil (USV) 2, das im Normalzustand geöffnet ist (normally-open), ein Hochdruckschaltventil (HSV) 3, das im Normalzustand geschlossen ist (normally-closed), eine Hydraulikpumpe (HP) 4, sowie eine am Rad angeordnete Radbremse 5. Das HSV 3 ist üblicherweise als zweistufiges Ventil ausgeführt, kann aber auch als einstufiges Ventil ausgeführt sein.

Die vom Hauptbremszylinder 1 abgehende Bremsleitung verzweigt zum USV 2 und zum HSV 3. Die entsprechenden Leitungen sind mit den Bezugszeichen 6 und 7 gekennzeichnet. Die Hydraulikpumpe 4, die dem HSV 3 nachgeordnet ist, kann bei geöffnetem USV 2 Bremsflüssigkeit vom Hauptbremszylinder 1 zu den Radbremsen 5 transportieren und dadurch den Bremsdruck an den Radbremsen automatisch aufbauen.

Bei einem normalen Bremsvorgang, bei dem der Bremsschlupf an den Rädern gering ist - der Fahrdynamikregler also nicht aktiv ist - baut sich je nach Stärke der Fußpedal-Betätigung am Hauptbremszylinder 1 ein bestimmter Bremsdruck auf. Dieser wird über das geöffnete USV 2 entlang des durch Pfeile a gekennzeichneten Pfades zur Radbremse 5 weitergeleitet. Das HSV 3 ist in diesem Fall geschlossen. Das Fahrzeug verzögert dann entsprechend der Fahrervorgabe.

Sobald der Radschlupf bei einem Brems- oder Beschleunigungsmanöver eine bestimmte Schwelle überschreitet, wird ein Fahrdynamikregler oder ein anderes Fahrer-Assistenzsystem, wie z. B. ACC oder ASR, aktiv und erhöht automatisch den an der Bremse 5 wirkenden Bremsdruck. Ein Regler 8 bestimmt in diesem Fall einen Soll-Bremsdruck, der an der Radbremse 5 wirken soll. Dieser wird üblicherweise durch entsprechende Vorgabe einer Solldrehzahl für die Hydraulikpumpe 4 eingestellt. Während der Druckregelung ist das USV 2 geschlossen und das HSV 3 geöffnet. Die Hydraulikpumpe 4 fördert dann Bremsflüssigkeit entlang des durch Pfeile b gekennzeichneten Pfades, vom Hauptbremszylinder 1 über die Bremsleitung 7 zur Radbremse und baut dadurch den erforderlichen Druck auf.

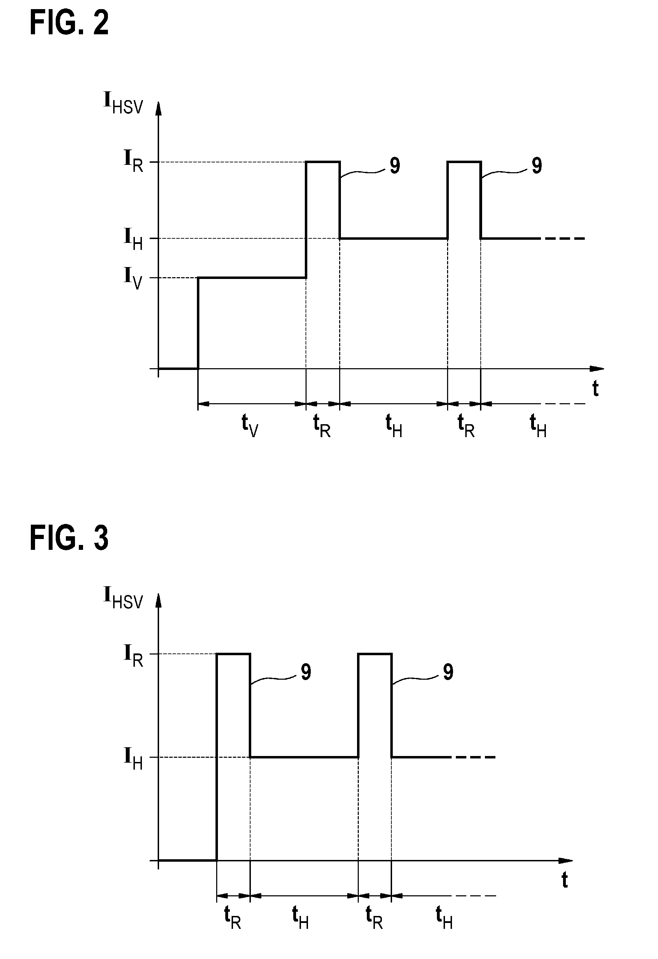

Um zu gewährleisten, dass die Hydraulikpumpe 4 hinreichend viel Bremsflüssigkeit aus dem Bremsflüssigkeitsbehälter entnehmen kann, muss sichergestellt sein, dass das HSV 3 ausreichend schnell und ausreichend weit öffnet. Aus dem Stand der Technik ist es bekannt, das HSV 3 mit einem elektrischen Signal anzusteuern, das verschiedene Phasen aufweist, wie sie in den Fig. 2 und 3 dargestellt sind.

Fig. 2 und Fig. 3 stellen typische Verläufe des Ansteuerstroms I_{HSV} für ein HSV 3 dar. Dabei zeigt Fig. 2 den Stromverlauf für ein zweistufiges HSV 3, und Fig. 3 den Stromverlauf für ein einstufiges HSV 3.

Im Falle eines zweistufigen HSV 3 (Fig. 2) wird durch Anlegen eines Stroms I_{V} zunächst eine Ventil-Vorstufe geöffnet, die einen kleinen Durchflussquerschnitt freigibt. Dadurch baut sich der am Ventil 3 herrschende Differenzdruck langsam ab. Da der am HSV 3 anliegende Differenzdruck eine schließende Wirkung auf das HSV 3 hat, wird es somit leichter, in einem zweiten Schritt die Hauptstufe zu öffnen. Nach Ablauf einer vorgegebenen Zeitspanne t_{V} wird dann für eine kurze Zeit t_{R} ein höherer Strom I_{R} angelegt (Refresh-Puls 9), um die Hauptstufe des Ventils vollständig zu öffnen. Danach folgt eine Haltephase der Dauer t_{H} mit einem geringeren Strom I_{H}, der so bemessen ist, dass das Ventil 3 offen bleibt. Um sicherzustellen, dass das Ventil in jedem Fall offen bleibt, werden regelmäßig Refresh-Pulse 9 angelegt. Den Refresh-Pulsen 9 folgt jeweils wieder eine Haltephase t_{H} mit einem niedrigeren Stromwert I_{H}.

Im Falle eines einstufigen HSV 3 (Fig. 3) entfällt die Vorstufe, d.h. der Vorgang beginnt mit dem Anlegen eines Pulses 9, gefolgt von einer Haltephase t_{H} mit einem Strom I_{H}. Danach folgen periodisch weitere Pulse 9 und Haltephasen t_{H}.

Den aus dem Stand der Technik bekannten Ansteuerverfahren ist gemeinsam, dass die Länge t_{V} der Ansteuerung der Vorstufe, als auch die Länge der Haltephasen t_{H} fest vorgegeben sind. Daraus ergibt sich das Problem, dass die Hauptstufe immer nach einer fest vorgegebenen Zeitdauer t_{V} durch einen Refresh-Puls 9 geöffnet wird, auch wenn die Situation eigentlich eine längere Ansteuerung der Vorstufe zulassen würde. Wenn das Ventil geöffnet ist, ergibt sich das Problem, dass immer nach einer vorgegebenen Haltedauer t_{H} ein Refresh-Puls 9 erzeugt wird, auch wenn die Haltedauer t_{H} in der betreffenden Situation länger sein könnte. Dies hat zur Folge, dass das Ventil in vielen Situationen unnötig oft schaltet, wodurch die Geräuschbelastung relativ hoch ist. Darüber hinaus fließt meist eine zu hohe elektrische Leistung durch die Spule des HSV, mit der Folge, dass sich das Ventil unnötig stark erwärmt und im Extremfall (z. B. bei langer Dauer eines Bremsmanövers) überhitzen kann.

### Offenbarung der Erfindung

Es ist daher die Aufgabe der vorliegenden Erfindung, die Geräuscherzeugung, sowie die thermische Belastung des Ventils zu reduzieren. Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird vorgeschlagen, die zeitliche Dauer wenigstens einer Ansteuerphase (t_{V}, t_{H}, t_{R}) des Schaltventils in Abhängigkeit von mindestens einem Bremsparameter einzustellen, um somit die Ansteuerung des Ventils an die jeweilige Fahrsituation anzupassen. Die Phasen t_{V}, t_{R} und/oder t_{H} haben damit eine von der aktuellen Fahrsituation abhängige, variable Länge. Somit können sowohl die Geräuscherzeugung als auch die thermische Belastung des Ventils optimiert werden.

Gemäß einer bevorzugten Ausführungsform wird als Bremsparameter mindestens einer der folgenden Parameter verwendet: eine von einem Regler errechnete Solldrehzahl der Hydraulikpumpe (Pumpensolldrehzahl) und/oder eine erforderliche Steigung des Pumpensolldrucks über der Zeit (Solldruckgradient) und/oder eine Differenz zwischen dem vom Fahrer aufgebrachten Hauptbremszylinderdruck und einem vom Regler angeforderten Solldruck (Differenzdruck). Diese Parameter stehen in herkömmlichen Assistenzsystemen, wie z. B. ESP, ASR oder ACC, üblicherweise zur Verfügung und können problemlos verwendet werden.

Das vorgeschlagene Verfahren ist sowohl für ein einstufiges als auch für ein zweistufiges Ventil anwendbar. Im Falle eines einstufigen Ventils werden die Dauer der Haltephasen und/oder der Refresh-Pulse aus einem oder mehreren der Parameter berechnet. Im Falle eines zweistufigen HSV kann alternativ oder zusätzlich auch die Dauer der Ansteuerung der Vorstufe situationsabhängig berechnet werden.

Die Dauer der Haltephasen beträgt vorzugsweise zwischen 100 ms und mehreren Sekunden. Die Dauer der Ansteuerung der Vorstufe bei einem zweistufigen Ventil beträgt vorzugsweise zwischen 0 ms und 200 ms.

Das genannte Ventil ist vorzugsweise ein Hochdruck-Schaltventil, das in einem Kfz-Bremskreis zwischen dem Hauptbremszylinder und einer Hydraulikpumpe angeordnet ist.

Die Erfindung wird nachstehend anhand der beigefügten Zeichnungen beispielhaft näher erläutert. Es zeigen:
Fig. 1 einen Teil eines aus dem Stand der Technik bekannten hydraulischen Bremssystems, das für eine Fahrdynamikregelung ausgelegt ist;
Fig. 2 den Verlauf des Ansteuersignals für ein zweistufiges Schaltventil;
Fig. 3 den Verlauf des Ansteuersignals für ein einstufiges Schaltventil; und
Fig. 4 die beispielhafte Kennlinie der Länge der Haltephase als Funktion der Pumpensolldrehzahl.

Bezüglich der Erläuterung der Fig. 1 wird auf die Beschreibungseinleitung verwiesen.

Fig. 2 und Fig.3 zeigen einen beispielhaften Verlauf des Ansteuersignals für ein zweistufiges (Fig. 2) und ein einstufiges (Fig. 3) Ventil 3. Wie vorstehend bereits ausgeführt wurde, umfasst das Stromsignal eine Ansteuerphase t_{V}, in der die Vorstufe des Ventils 3 mit einem Strom I_{V} angesteuert wird, gefolgt von einem Impuls 9 der Dauer t_{R}, mit dem die Hauptstufe des Ventils 3 durch einen hohen Strom I_{R} geöffnet wird, und einer Haltephase t_{H}, in der das Ventil 3 mit einem niedrigeren Strom I_{H} offen gehalten wird. Die Refresh-Pulse 9 und die Haltephasen t_{H} werden danach periodisch wiederholt.

Gemäß der vorliegenden Erfindung ist die Dauer einer oder mehrerer der Phasen tv, t_{R} und t_{H} variabel, abhängig von einem Bremsparameter. Dadurch wird es möglich die Ansteuerung des Ventils 3 an die aktuelle Fahrsituation anzupassen. Es ist leicht zu erkennen, dass z. B. durch eine Verlängerung der Dauer t_{V} oder der Haltephasen t_{H} die gesamte umgesetzte elektrische Leistung (∼ I²_{HSV}) erheblich vermindert werden kann. Außerdem wird durch eine Verlängerung der Haltephasen t_{H} die Anzahl der Pulse 9 pro Zeit verringert.

Die Länge der einzelnen Phasen t_{V}, t_{H}, t_{R} ist vorzugsweise eine Funktion einer vom Regler 8 errechneten Solldrehzahl der Hydraulikpumpe (Pumpensolldrehzahl) und/oder einer geforderten Steigung des Pumpensolldrucks über der Zeit (Solldruckgradient) und/oder einer Differenz zwischen dem vom Fahrer aufgebrachten Hauptbremszylinderdruck und einem vom Regler 8 angeforderten Solldruck (Differenzdruck). Die Erfindung ist jedoch nicht auf eine dieser Größen beschränkt, so dass auch andere Parameter verwendet werden können.

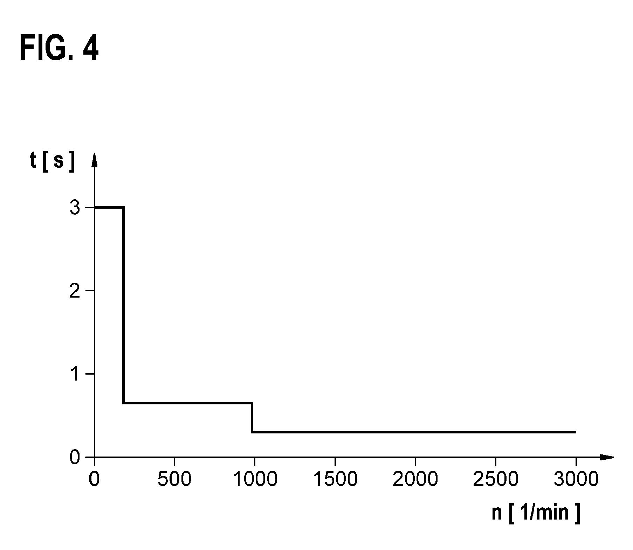

Im Folgenden wird anhand von Fig. 4 die Abhängigkeit der Länge der Haltephase t_{H} von der Pumpensolldrehzahl beispielhaft beschrieben. Fig. 4 zeigt die Länge der Haltephase t_{H} als Funktion der Solldrehzahl n. Darin ist zu erkennen, dass die Dauer der Haltephase t_{H} bei eher unkritischen Bremsvorgängen mit geringer Dynamik, bei denen niedrige Pumpensolldrehzahl n erforderlich ist, mehrere Sekunden (hier 3 s) betragen kann. Bei einer etwas größeren Pumpensolldrehzahl n zwischen 100 rpm und 1000 rpm beträgt die Dauer t_{H} etwa 0,5 s. Erst bei Pumpensolldrehzahlen von mehr als 1000 rpm sinkt die Dauer der Haltephase t_{H} auf etwa 100 ms. Somit lässt sich die Haltephase t_{H} über weite Drehzahlbereiche relativ lang einstellen.

## Patentansprüche

1. Verfahren zum Ansteuern eines Schaltventils (3), das in einem hydraulischen Bremssystem eines Kraftfahrzeugs angeordnet ist, wobei das Schaltventil (3) durch Anlegen eines elektrischen Signals, das verschiedene Ansteuerphasen (t_{V},t_{H},t_{R}) mit unterschiedlicher Stromstärke aufweist, geöffnet wird, wobei zum Öffnen des Ventils (3) für eine Zeit t_{R} ein Strom I_{R} (Refresh-Pulse) angelegt wird, um das Ventil (3) vollständig zu öffnen und danach ein niedrigerer Strom I_{H}, der so bemessen ist, dass das Ventil (3) offen bleibt und wobei anschließend der Refresh-Puls periodisch wiederholt wird, **dadurch gekennzeichnet, dass** die zeitliche Dauer wenigstens einer Ansteuerphase (t_{V},t_{H},t_{R}) des Schaltventils (3) in Abhängigkeit von mindestens einem Bremsparameter eingestellt wird.

2. Verfahren nach Anspruch 1, **dadurch gekennzeichnet, dass** mindestens einer der Bremsparameter Pumpensolldrehzahl, Solldruckgradient oder Differenzdruck zur Bestimmung der zeitlichen Dauer mit mindestens einer Ansteuerphase (t_{V},t_{H},t_{R}) des Schaltventils (3) verwendet wird.

3. Verfahren nach Anspruch 1 oder 2, **dadurch gekennzeichnet, dass** im Falle eines einstufigen Schaltventils (3) die zeitliche Dauer des Refresh-Pulses (t_{R}) oder einer Haltephase (t_{H}) in Abhängigkeit von mindestens einem Bremsparameter eingestellt wird.

4. Verfahren nach Anspruch 1 oder 2, **dadurch gekennzeichnet, dass** im Falle eines zweistufigen Schaltventils (3) die zeitliche Dauer des Refresh-Pulses (t_{R}), einer Haltephase (t_{H}) oder einer Vorstufe (t_{V}) in Abhängigkeit von mindestens einem Bremsparameter eingestellt wird.

5. Verfahren nach Anspruch 3 oder 4, **dadurch gekennzeichnet, dass** die zeitliche Dauer der Haltephase (t_{H}) von etwa 100 ms bis zu mehreren Sekunden betragen kann.

6. Verfahren nach Anspruch 4, **dadurch gekennzeichnet, dass** die zeitliche Dauer der Vorstufe (t_{V}) von 0 ms bis etwa 200 ms betragen kann.

7. Verfahren nach einem der vorhergehenden Ansprüche, **dadurch gekennzeichnet, dass** das Schaltventil (3) ein Hochdruck-Schaltventil ist.

8. Steuergerät, umfassend Mittel zum Ansteuern eines Ventils (3) gemäß einem Verfahren nach einem der vorhergehenden Ansprüche.

## Claims

1. Method for actuating a control valve (3) which is arranged in a hydraulic brake system of a motor vehicle, wherein the control valve (3) is opened by applying an electrical signal which has various actuation phases (t_{V}, t_{H}, t_{R}) with different current intensity, wherein in order to open the valve (3) for a time t_{R} a current I_{R} (refresh pulse) is applied in order to open the valve (3) completely, and subsequently a relatively low current (I_{H}), which is dimensioned such that the valve (3) remains open, and wherein subsequently the refresh pulse is repeated periodically, **characterized in that** the duration of at least one actuation phase (t_{V}, t_{H}, t_{R}) of the control valve (3) is set as a function of at least one braking parameter.

2. Method according to Claim 1, **characterized in that** at least one of the braking parameters comprising the pump set point rotational speed, set point pressure or differential pressure is used to determine the duration of at least one actuation phase (t_{V}, t_{H}, t_{R}) of the control valve (3).

3. Method according to Claim 1 or 2, **characterized in that** in the case of a single-stage control valve (3) the duration of the refresh pulse (t_{R}) or of a holding phase (t_{H}) is set as a function of at least one braking parameter.

4. Method according to Claim 1 or 2, **characterized in that** in the case of a two-stage control valve (3) the duration of the refresh pulse (t_{R}), of a holding phase (t_{H}) or of a preliminary stage (t_{V}) is set as a function of at least one braking parameter.

5. Method according to Claim 3 or 4, **characterized in that** the duration of the holding phase (t_{H}) can be from approximately 100 ms to several seconds.

6. Method according to Claim 4, **characterized in that** the duration of the preliminary stage (t_{V}) can be from 0 ms to approximately 200 ms.

7. Method according to one of the preceding claims, **characterized in that** the control valve (3) is a high-pressure control valve.

8. Control device comprising means for actuating a valve (3) in accordance with a method according to one of the preceding claims.

## Revendications

1. Procédé de commande d'une soupape de commutation (3) qui est disposée dans un système de freinage hydraulique d'un véhicule automobile, la soupape de commutation (3) étant ouverte par application d'un signal électrique qui présente différentes phases de commande (t_{V}, t_{H}, t_{R}) avec une intensité de courant différente, un courant I_{R} (impulsion de rafraîchissement) étant appliqué pendant un temps t_{R} pour l'ouverture de la soupape (3), afin d'ouvrir complètement la soupape (3) puis un courant plus faible I_{H}, mesuré de telle sorte que la soupape (3) reste ouverte, étant appliqué, et ensuite l'impulsion de rafraîchissement étant répétée de manière périodique, **caractérisé en ce que** la durée temporelle d'au moins une phase de commande (t_{V}, t_{H}, t_{R}) de la soupape de commutation (3) est ajustée en fonction d'au moins un paramètre de freinage.

2. Procédé selon la revendication 1, **caractérisé en ce qu'**au moins l'un des paramètres de freinage vitesse de rotation de consigne de la pompe, gradient de pression de consigne ou pression différentielle est utilisé pour déterminer la durée temporelle avec au moins une phase de commande (t_{V}, t_{H}, t_{R}) de la soupape de commutation (3).

3. Procédé selon la revendication 1 ou 2, **caractérisé en ce que** dans le cas d'une soupape de commutation (3) à un étage, la durée temporelle de l'impulsion de rafraîchissement (t_{R}) ou d'une phase de maintien (t_{H}) est ajustée en fonction d'au moins un paramètre de freinage.

4. Procédé selon la revendication 1 ou 2, **caractérisé en ce que** dans le cas d'une soupape de commutation (3) à deux étages, la durée temporelle de l'impulsion de rafraîchissement (t_{R}), d'une phase de maintien (t_{H}) ou d'un étage préalable (t_{V}) est ajustée en fonction d'au moins un paramètre de freinage.

5. Procédé selon la revendication 3 ou 4, **caractérisé en ce que** la durée temporelle de la phase de maintien (t_{H}) peut valoir d'environ 100 ms jusqu'à plusieurs secondes.

6. Procédé selon la revendication 4, **caractérisé en ce que** la durée temporelle de l'étage préalable (t_{V}) peut valoir de 0 ms à environ 200 ms.

7. Procédé selon l'une quelconque des revendications précédentes, **caractérisé en ce que** la soupape de commutation (3) est une soupape de commutation haute pression.

8. Appareil de commande, comprenant des moyens de commande d'une soupape (3) selon un procédé selon l'une quelconque des revendications précédentes.
